# EUROPEAN PATENT APPLICATION

(11) **EP 2 317 486 A2**
(43) Date of publication of application: **04.05.2011**
(21) Application number: 10186870.1
(22) Date of filing: 07.10.2010
(51) Int. Cl.: G08B 13/14

(54) **Electronic system for controlling solar panels and related method**

(30) Priority: 29.10.2009 IT CN20090010; 01.07.2010 IT TO20100567
(71) Applicant: SHD di Bassignana Luigi & C. SNC, 12100 Cuneo (IT)
(72) Inventor: Bassignana, Enrico, 12100, CUNEO (IT); Bassignana, Luigi, 12100, CUNEO (IT)
(74) Representative: Robba, Pierpaolo

(57) **Abstract**

The present invention concerns an electronic system for controlling solar panels (12) connected by means of a pair of electrical connections (23) to at least one conversion device (14). The system comprises panel devices (21) associated with respective panels (12) and arranged to detect parameters associated with the panels (12), and at least one electronic control device (26, 26-M), arranged to transmit commands and/or information requests to the panel devices (21). The control device (26, 26-M) is arranged to transmit the commands and/or the information requests by frequency modulating a first signal on the pair of electrical connections (23) in a master mode, and the panel devices (21) are arranged to transmit the parameters associated with the panels (12) by amplitude modulating a second signal on the pair of electrical connections (23) in a slave mode. The invention also concerns a method of electronically controlling the system.

## Description

### Technical field

The present invention generally relates to an electronic system for controlling solar panel plants.

In particular, the present invention relates to an electronic system<<< for controlling photovoltaic plants, to which reference will be made hereinafter.

### Prior art

Solar panel plants, and in particular photovoltaic plants, are well known.

Generally, such plants are not equipped with effective systems for controlling and managing the photovoltaic panels. Actually, the prior art plants do not allow effectively performing management functions simultaneously with control functions, such as antitheft functions simultaneously with diagnostic functions and functions of blocking power generation.

Considering antitheft systems only, for instance, antitheft systems for photovoltaic panels are known which may be grouped as follows depending on the kinds of technology employed:

### 1) Satellite-controlled antitheft systems for photovoltaic plants

According to such systems, electronic circuitry dedicated to the only antitheft function for the solar panels and based on satellite-controlled location technology is incorporated into the panels themselves. Antitheft systems of this kind allow controlling the panel operation in a predetermined geographic area only and stopping panel operation in other areas, but generally they do not provide other functions, such as for instance management and control functions.

### 2) Optical fibre antitheft systems for photovoltaic plants

According to such systems, an optical fibre passing in closed-loop through all photovoltaic panels is laid and the theft is detected because the fibre is interrupted. Also in those systems the problem exists that generally they do not provide other functions, such as for instance management and control functions. Moreover, such systems require an additional wiring on the plants.

### 3) Antitheft systems for photovoltaic plants based on reflecting optical sensors

Such systems use optical sensors located on the panels and arranged to signal possible attempts of removing the sensors from the panels. Also in those systems the problem exists that generally they do not provide other functions, such as for instance management and control functions. Moreover, such systems require an additional wiring on the plants.

In general terms, the Applicant has realised that the prior art systems are not capable of effectively solving the problems pointed out above concerning the general management of the plants, besides generally requiring an additional wiring on the plants.

### Description of the invention

It is an object of the present invention to provide a system and a method capable of solving the problems of the prior art pointed out above.

The object is achieved by the electronic system for managing or controlling solar panel plants as claimed.

The present invention also concerns a method of managing or controlling the system according to the invention.

The claims are integral part of the technical teaching provided herein in respect of the invention.

In accordance with a feature of a preferred embodiment, the system includes electronic devices associated with the panels and at least one control device, wherein the control device is arranged to communicate with the devices associated with the panels by frequency modulating a first kind of signals, and wherein the devices associated with the panels are arranged to communicate with the control device by amplitude modulating a second kind of signals.

In accordance with another feature of the present invention, the first kind of signals is also arranged to provide the power supply for the electronic devices associated with the panels.

In accordance with a further feature of the present invention, the devices associated with the panels are arranged to electrically short-circuit the panels or to block or interrupt their power generation upon receiving suitable commands from the control device.

### Brief Description of the Figures

The above and other features and advantages of the present invention will become apparent from the following description of preferred embodiments thereof, given only by way of non limiting example with reference to the accompanying drawings, in which elements denoted by a same or similar numerical reference correspond to components having the same or similar function and construction, and in which:
- Fig. 1 is a general block diagram of a solar panel system according to the invention;
- Fig. 2 is a synthetic electrical diagram of part of the system shown in Fig. 1;
- Fig. 3 is a synthetic electrical diagram of a device according to the present invention;
- Fig. 4 is a synthetic electrical diagram of a solar panel device according to the present invention; and
- Fig. 5 is a synthetic electrical diagram of a solar panel device according to a variant embodiment of the present invention;

### Description of a Preferred Embodiment

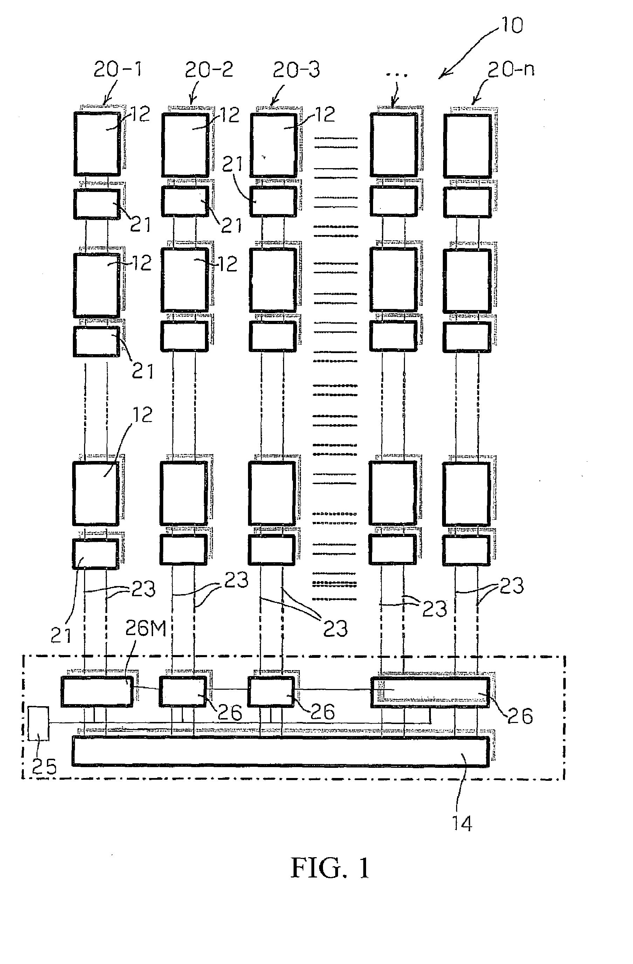

Referring to Fig. 1, a system 10 according to the present invention comprises, in the preferred embodiment, a plurality of solar panels 12, for instance photovoltaic panels, connected in series in order to generate a d.c. voltage proportional to the number of panels connected together.

Serially connected panels 12 may be grouped into a plurality of panel groups 20-1, 20-2, 20-3...20-n connected in known manner, through pairs of electrical connections 23, to a conversion device 14, for instance an inverter of known type, arranged to convert the voltage generated by the different panel groups for instance into an a.c. voltage to be sent to a mains.

In the preferred embodiment, an electronic panel device (panel device) 21 is associated with each panel 12, and each panel group 20-1, 20-2, 20-3...20-n, or even a plurality of panel groups, includes an electronic control device (string device) 26 arranged to provide the power supply to panel devices 21 in the group(s) and to exchange information with said devices according to a communication protocol, as it will be described in detail hereinafter.

Both panel devices 21 and control devices 26 are connected to the pairs of electrical connections 23 connecting one or more panel groups 20-1, 20-2, 20-3...20-n to inverter 14.

More preferably, each panel device 21 is mounted on board a panel 12, for instance embedded into the panel, by a panel manufacturer, or it is wired externally to panel 12 by an installer, and string device 26 is mounted in cascade between the pairs of electrical connections (string terminations) 23 and the inverter 14 so as to build an architecture in which:
- each panel 12 to be managed is associated with a panel device 21;
- each panel group or panel string 20-1, 20-2, 20-3...20-n to be managed is connected to inverter 14 through a string device 26.

Preferably, panel device 21 is made as a microprocessor-based electronic board and is arranged to:
- perform measurements on panel 12 it is associated with: in particular, according to the present exemplary embodiment, the panel device includes a position and three-dimensional movement detector 35, arranged to detect any movement and acceleration of panel 12 in the space and to generate and transmit an alarm signal to string device 26, as well as sensors arranged to measure parameters such as the voltage supplied by the panel;
- block voltage and current generation by panel 12 upon receiving a command from string device 26,

In the preferred embodiment, panel device 21 receives the power supply from string device 26, so that panel device 21 does not require any power supply from panel 12 it is associated with.

In the preferred embodiment, panel device 21 is supplied with power by a sinusoidal a.c. signal generated by string device 26, which signal is injected in "current mode" into string terminations 23 connecting a panel group to the inverter, as it will be described in detail hereinafter.

Preferably, string device 26 is made as a microprocessor-based electronic board that receives the power supply from a power source or power supply circuit that preferably is independent from inverter 14, and the string device is possibly supplied with a voltage delivered by an uninterruptable power supply or backup unit 25.

In the preferred embodiment, string device 26 is arranged to provide the power supply to panel devices 21 associated with one or more panel strings 20-1, 20-2, 20-3 ... 20-n and to exchange information with one or more panel strings.

Hereinafter, for the sake of simplicity, it will be assumed that a string device 26 is connected with one string only and that it "sees" panel devices 21 connected to the string.

In any case, in the preferred embodiment, system 10 comprises a plurality of panel strings 20-1, 20-2, 20-3...20-n and a single string device, preferably for a same circuit structure, is configured as master string device 26-M.

In accordance with other embodiments, string devices 26 or master string device 26-M include a position and three-dimensional movement detector 35, arranged to detect possible theft attempts.

In accordance with yet other embodiments, string devices 26 or, preferably, master string device 26-M are connected to external devices so that they can be managed or controlled by remotely-connected devices. Generally, string devices 26 or, preferably, master string device 26-M are arranged to perform, within system 10, functions such as:
- gathering and storing information concerning the panel strings;
- determining the state of system 10 or of the panel string;
- managing communication of alarms and energy measurements coming from the panel strings;
- measuring and storing ambient temperature, humidity and radiation of system 10 by means of suitable detectors connected to said devices;
- exchange instructions and commands with remotely-connected devices.

Of course, if the system comprises a single panel string, the associated string device 26 will correspond to master string device 26-M, as the skilled in the art will readily understand.

According to the communication protocol between string device 26 and panel device 21, string device acts as the master unit and panel device 21 acts as the slave unit.

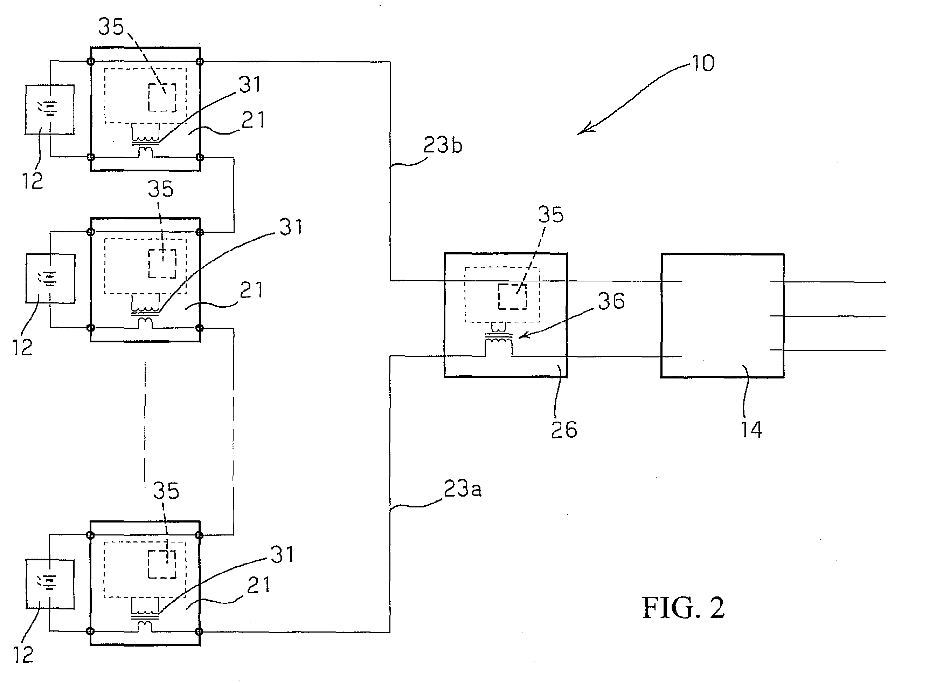

In particular, according to the present exemplary embodiment, string device 26 or 26-M (Fig. 1, Fig. 2) sends signals, e.g. a.c. signals such as for instance sinusoidal signals, on one of electrical connections 23, for instance connection 23a or 23b.

More particularly, according to the preferred embodiment, two kinds of electrical signals coexist on connections 23:
- a first kind, or d.c. high power signal, due to panels 12;
- a second kind, or a.c. low power signals, generated by string device 26 and transmitted to panel devices 21.

The high power signal (first signal) is the d.c. signal generated by panels 12 and absorbed by inverter 14 to generate power towards the mains.

The low-power signal (second signal) is for instance a signal with frequency 90 kHz and current 20 mA, injected in series, for instance on connection 23a to which string device 26 is connected, and is arranged to perform the power supply and logic communication functions for panel devices 21.

More particularly, string device 26, which is located between string terminations 23 and inverter 14, behaves as a short circuit for the direct current, and does not cause power drops or losses as far as power generated by panels 12 is concerned.

Actually, according to the preferred embodiment, string device 26, which is arranged to transmit the second signal towards the different panel devices 21, is connected in series with connection 23a through a pass-through connection 36, for instance a suitably dimensioned transformer, and injects the second signal onto electrical connection 23a.

More preferably, transformer 36 is so dimensioned that:
- the direct current passing through it does not cause its saturation;
- its electrical resistance to the direct current is few tens of milliohms.

The second signal, injected as an alternating current, flows along connection 23a and passes through panels 12 added to the first d.c. signal.

Preferably, also panel devices 21 are connected to connection 23a through pass-through connections 31, for instance through respective current transformers, similarly to what has been disclosed for string device 26, so that said transformers 31 are passed through by both kinds of signals.

Also for panel devices 21, transformer 31 is for instance such that:
- its electrical resistance to the direct current flow is substantially zero (a few tens of milliohms);
- it does not become saturated because of the direct current passing through it;
- it has a characteristic impedance corresponding to that of the signal generated by the string device, for instance a 90 kHz a.c. signal;
- it presents, on its secondary winding, a voltage capable of supplying the panel device, e.g. a 10 V peak voltage.

As it can be readily appreciated, the protocol described above is based on waves conveyed along a power line, along which a direct current normally propagates.

The injected sinusoidal signal (second signal) has however a twofold function:
1) remote power supply;
2) data communication.

Remote power supply allows sending power for the operation of panel device 21.

In the preferred embodiment, two-way data communication is performed in the following manner:
- for transmission from string device 26 to panel device 21, by frequency modulating the low power signal injected into the circuit;
- for transmission from panel device 21 to string device 26, by amplitude modulating the current absorbed by panel device 21.

More particularly, in the preferred embodiment, transmission from string device 26 to panel device 21 takes place by changing the frequency generated by string device 26.

For instance, considering a mark state frequency of 90 kHz, corresponding to a logic "1" bit, transmission of a logic "0" bit is performed by changing the frequency generated to 85 kHz. Such kind of modulation is for instance a "Manchester" modulation.

Of course, in accordance with other embodiments, also other kinds of modulation can be employed, without thereby departing from the scope of what is described and claimed.

In accordance with the example, panel device 21 is arranged to demodulate the low power signal by measuring its frequency variations in time.

Preferably, panel devices 21 are capable of automatically self calibrating for frequency recognition, so that also variations of about 20% are readily managed by the panel devices.

As stated above, the frequency values mentioned here are only indicative.

Transmission from panel device 21 to string device 26 takes place, for instance, by changing the current absorbed by panel device 21 in time.

The current variation is obtained, for instance, by short-circuiting or not short-circuiting the secondary winding of transformer 31 supplying panel device 21. Of course, the short-circuit time must be limited, so as to keep panel device 21 supplied.

Also in such case the modulation is preferably a "Manchester" modulation. In accordance with other embodiments, a different modulation can be employed, without thereby departing from the scope of what is described and claimed.

Of course, in all cases, the average duty cycle must be such as to ensure that panel device 21 is kept supplied.

The communication protocol as described above also includes, besides the communication mode, an addressing mode in which string device 26 addresses the individual panel devices 21.

The addressing mode exploits MAC addresses, usually present in microprocessors, and uses such addresses by providing an address acquisition procedure preceding the data communication between string device and panel devices.

In the address acquisition step, string device 26:
1. broadcasts a logic address CLEAR command, whereby all panel devices 21 cancel an own logic address, if present;
2. broadcasts a DISCOVERY command, requesting from each panel device 21 the transmission of its MAC address, with a random delay, within a predetermined time period;
3. receives the responses from panel devices 21, which transmit with random delays at different times, without generating transmission conflicts;
4. sequentially allots a logic address to each panel device 21 having responded, by checking that storage, preferably on a non-volatile memory, has taken place, through the transmission of an ACK signal

Steps 2 to 4 of the address acquisition procedure are repeated until no further panel device 21 responds to the DISCOVERY command.

For instance, according to the preferred embodiment, the address acquisition procedure is terminated after the procedure has been repeated three times without response from any panel device 21.

Once the address acquisition procedure is over, string device 26 has allotted a logic address to each panel device 21 belonging to a panel string 20-1, 20-2, 20-3...20-n and has stored such address.

In the data communication, the string device and the panel device communicate by means of the logic address. Of course, in accordance with other embodiments, string device 26 may directly use the MAC addresses.

The operation of system 10 as described is as follows.

Panel device 21 communicates with the string device in SLAVE mode, that is, panel device 21 responds to commands from string device 26, without taking any other transmission initiative.

At the physical level, reception at panel device 21 takes place by demodulating the frequency of the power supply signal arriving from string device 26. Transmission by panel device 21 takes place by modulating the current absorbed by panel device 21 itself.

In particular:
- string device 26 transmits by frequency modulating the carrier (which also provides the power supply to the various panel devices 21);
- panel device 21 responds by amplitude modulating the current absorbed on the electrical connections and, in the preferred embodiment, it executes instructions received from the string device and/or communicates data associated with the panel.

For instance, panel device 21 transmits data such as:
- voltage generation;
- spatial position (axes x, y, z) of panel 12, by measuring the acceleration and the static position of panel 12, so as to signal possible attempts of displacement/theft and acts of vandalism on panel 12.

In accordance with further embodiments, the panel device is also arranged, upon instructions received from string device 26, to block the power generation by panel 12 associated therewith.

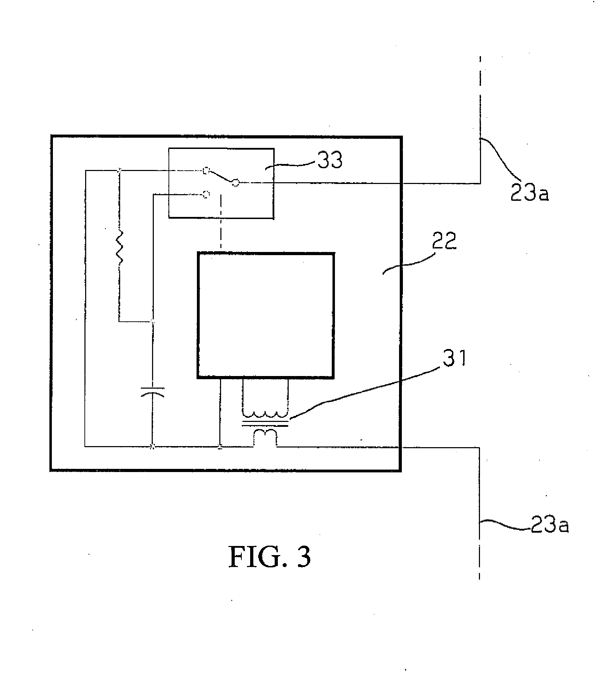

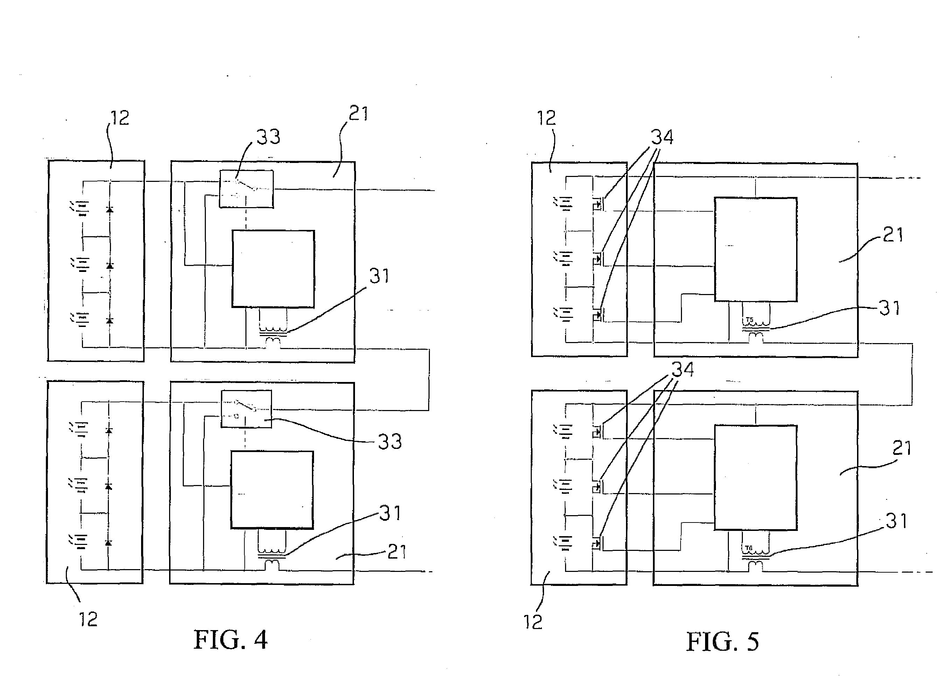

According to a first embodiment, the blocking function may be carried out for instance by electronically excluding or bypassing, in known manner, the electrical connection to panel 12 by means of blocking means 33 (Fig. 3, Fig. 4), for instance by means of a bistable relay.

In accordance with that embodiment, panel device 21 is arranged, upon receiving a serial logic command from string device 26, to operate bistable relay 33 so as to exclude panel 12 from electrical connections 23a, 23b. Upon exclusion or bypassing of panel 12, panel device 21 is always capable of measuring the voltage generated by the panel, for instance thanks to a suitable configuration of the panel device itself.

In accordance with that embodiment, string device 26 may send the exclusion command to all panel devices 21 or only to desired ones. Usually, in case of fire, the command will be sent to all panel devices.

Sending the exclusion command to specific panels may be useful when the power generated by the panels is very low or when the panels act as loads and not as generators. In such cases, their exclusion from the group allows eliminating the unwanted load and hence to save power that would be dissipated, for instance on the bypass diodes usually provided inside panel 12.

Actually, operation of relay 33 entails replacing the panel with a short circuit that, connected in series with electrical connections 23a or 23b, keeps the electrical continuity of the circuit unchanged.

Thanks to such an embodiment, it is possible to obtain that:
- panels that have not been bypassed continue generating power on the string;
- panels that have been bypassed remain off without dissipating power;
- the logic communication between string device 26 and panel devices 21 is always on.

According to a second embodiment, the blocking function can be carried out for instance by means of electronic switching components 34 (Fig. 5), for instance MOS-FET components of known type, applied to cells or groups of cells in panel 12.

In accordance with such an embodiment, panel device 21 is capable of inhibiting one or more photovoltaic cells in panel 12 by selectively short-circuiting the cell(s) to be inhibited or bypassed, based upon programs stored in the panel device and arranged to detect cells that are possibly failed or malfunctioning.

In accordance with such an embodiment, electronic switching components 34 replace the bypass diodes usually provided inside photovoltaic panels 12, which diodes, as known, are automatically operated when the photovoltaic cells pass from the state of power generators to the state of passive loads.

In accordance with such an exemplary embodiment, electronic switching components 34, which are preferably based on MOS technology, ensure a low voltage drop when in the ON condition, thereby considerably reducing dissipated power with respect to the power dissipated by Schottky diodes usually employed in panels 12.

This embodiment also allows blocking power delivery by the panel by simultaneously operating electronic switching components 34.

According to a third embodiment, the blocking function can be carried out, for instance, by connecting in series with electrical connections 23a, 23b an independent panel device 22, which in this case is not associated with any panel and which includes blocking means 33 (Fig. 3, Fig. 4) as described above.

In accordance with such an embodiment, independent device 22 acts as a remote-controlled switch, as the skilled in the art can readily understand. Actually, by means of a suitable command from string device 26, it is possible to request the operation of bistable relay 33 so as to stop the d.c. flow along electrical connections 23a or 23b.

Also in this embodiment, like in the previously described ones, the electrical continuity at the level of the power supply and the communication towards panel devices 21 is ensured by suitably configuring a capacitor provided in independent device 22.

Of course, the functions as described above can be provided or not provided depending on the configuration of system 10.

For instance, string device 26 is arranged to send a series of sequential communications to all panel devices 21 or to independent device 22, if provided, to which the logic address has been allotted, by using such a logic address. Panel devices 21 are arranged to respond by transmitting, for instance, data selected from the group including:
- voltage generated;
- diagnostic;
- theft.

In case of fire detection, if system 10 provides so, master string device 26-M broadcasts a logic command to all string devices 26, if provided, which in turn forward it to the respective panel devices 21 or to independent device 22, if provided, so as to electronically bypass or short-circuit the panels by means of blocking means 33 or 34 and to block power generation by each individual panel, or by cells in the panels or in all panels, depending on the embodiment.

In general, the provision of electronic circuits arranged to block power generation by panel 12 can also be exploited to bypass failed panels in a string so as to improve string productivity. Actually, when a panel becomes a load instead of generating power, keeping the panel on is generally a worse condition, in terms of power produced, than that resulting from short-circuiting or bypassing the panel or panel cells, as the skilled in the art can readily understand from what has been described with reference to the embodiments shown in Figs. 4 and 5.

The present description has generally assumed that a panel device 21 is associated with each panel 12 in system 10. Of course, the provision of a panel device for each panel is not a necessary element for building the system, since the panel devices may be selectively associated with some panels only, while leaving the others unequipped, depending on economic and functional choices.

The present invention as described may allow attaining one or more of the following advantages:
1) construction of an integrated and technologically advanced system, which is easy to be installed and is capable of performing the functions of antitheft system, fire preventing system (intended as a system blocking current and voltage generation by the whole plant or by individual panels or individual cells in the panels), efficiency measurement and diagnostic of the whole of solar plants or of the individual panels thereof;
2) possibility of application to any photovoltaic plant, independently of the kind of photovoltaic panels installed;
3) possibility of integrating control devices directly inside the panels.

By summarising, according to the Applicant, the invention attains one or more of the following objectives:
- construction of an electronic antitheft, diagnostic and fire-prevention assisting system for photovoltaic plants, which system can be applied in short time, in simple manner and to any photovoltaic plant, while providing moreover the possibility of directly integrating the panel device into the panel itself;
- possibility of remotely managing (by means of any Internet browser) the efficiency analysis and the functional diagnostic of the plant or system and the possible block of the power generation by the plant by means of local or remote connections to the string device, in particular the master string device.

Of course, obvious changes and modifications to the above description, in respect of the components, the circuit elements, the connections and the contacts, as well as in respect of the details of the circuitry, the illustrated construction and the operating method are possible without departing from the scope of the invention as set forth in the following claims.

## Claims

1. Electronic system for controlling solar panels (12) connected by means of a pair of electrical connections (23) to at least one conversion device (14), said system comprising:
- at least one electronic panel device (21) associated with a panel (12) and arranged at least to detect parameters associated with the panel (12);
- at least one electronic control device (26, 26-M), arranged to transmit commands and/or information requests to said at least one electronic panel device (21);
**characterised in that**:
- said control device (26, 26-M) is arranged to transmit said commands and/or information requests by frequency modulating a first kind of signals on said pair of electrical connections (23) in a master mode; and
- said at least one panel device (21) is arranged to transmit said parameters associated with the panel (12) by amplitude modulating a second kind of signals on said pair of electrical connections (23) in a slave mode.

2. The electronic system as claimed in claim 1, wherein said at least one panel device includes parameter detecting means chosen out of the group including;
- voltage detecting means;
- antitheft sensing means.

3. The electronic system as claimed in claim 1 or 2, wherein said at least one panel device (21) includes a position and three-dimensional movement detector (35), arranged to detect any movement and acceleration of the panel and to generate and transmit an alarm signal to said control device (26, 26-M).

4. The electronic system as claimed in any of claims 1 to 3, wherein said at least one panel device further includes blocking means (33, 34) arranged to block the delivery of power by said panel (12) or by cells of said panel (12).

5. The electronic system as claimed in claim 4, wherein:
- said panels are grouped into panel groups (20-1, 20-2, 20-3...20-n), said panels being associated with respective panel devices;
and wherein:
- said control device (26, 26-M) is arranged to transmit commands arranged to selectively or wholly block power delivery by said panels grouped into panel groups (20-1, 20-2, 20-3...20-n).

6. The electronic system as claimed in any of claims 1 to 5, wherein
- said control device (26, 26-M) and said at least one panel device (21) are connected to said pair of electrical connections (23) by means of pass-through connections (31, 36);
and wherein
- said control device (26, 26-M) is arranged to supply said at least one panel device (21) with power by means of said frequency modulated first signal.

7. The electronic system as claimed in any of claims 1 to 6, comprising:
- a plurality of panel groups (20-1, 20-2, 20-3...20-n), one or more of said groups being controlled by an electronic control device (26);
said system further comprising:
- a master electronic device (26-M) arranged to control said control devices (26) by exchanging information with said control devices (26).

8. The electronic system as claimed in claim 7, wherein said control devices and said master electronic device (26-M) receive the power supply from a power supply circuit (25) independent from said pair of electrical connections (23).

9. The electronic system as claimed in claim 7 or 8, wherein said control devices (26) or said master electronic device (26-M) include means arranged to get and store data coming from external sensing means chosen out of the group including:
- temperature sensing means;
- humidity sensing means;
- radiation sensing means; or
- antitheft sensing means.

10. The electronic system as claimed in any of claims 6 to 8, wherein said control devices (26) or said master electronic device (26-M) include communication means connectable to local or remote devices arranged to control the operation of said control devices (26) or said master electronic device (26-M).

11. Method of electronically controlling a system including solar panels (12) connected by means of electrical connections (23) to a conversion device (14), said system comprising at least one control device (26) and plurality of electronic devices (21) associated with respective panels (12), said electronic devices (21) being arranged to detect parameters associated with the panels (12), said method comprising the steps of:
- transmitting commands and/or information requests from said control device (26) to said panel devices (21) by frequency modulating a first kind of signals on said electrical connections (23) in a master mode; and
- transmitting said parameters associated with the panels (12) from said panel devices (21) to said control device (26) by amplitude modulating a second kind of signals on said electrical connections (23) in a slave mode.;

12. The method as claimed in claim 11, wherein said step of transmitting commands and/or information requests by said control device (26) is preceded by an address acquisition step including:
- broadcasting of a logic address CLEAR command by said control device (26, 26-M), whereby said panel devices (21) cancel a respective logic address, if present;
- broadcasting of a DISCOVERY command by said control device (26, 26-M), requesting from each panel device (21) the transmission of its MAC address, with a random delay, within a predetermined time period;
- receiving, at said control device (26, 26-M), responses from the panel devices (21), said responses including said MAC address of the panel device;
- sequentially allotting, by said control device (26, 26-M) to each panel device (21) having responded, a logic address associated with said MAC address.

13. The method as claimed in claim 11 or 12, wherein said step of transmitting commands and/or information requests by said control device (26) also includes the step of supplying said panel devices (21) with power by means of said frequency modulated first kind of signals.

14. The method as claimed in any of claims 11 to 13, wherein said step of transmitting commands and/or information requests by said control device (26) also includes the step of transmitting commands arranged to selectively or wholly block power delivery by said panels (12) or by cells in said panels (12).
